# FASCICULE DE BREVET EUROPEEN

(11) **EP 0 437 391 B1**
(45) Date de publication et mention de la délivrance du brevet: **30.11.1994**
(21) Numéro de dépôt: 91400025.2
(22) Date de dépôt: 08.01.1991
(51) Int. Cl.: B23B 31/02, B23B 29/034, B23C 5/24

(54) **Ensemble de fraisage perfectionné, notamment pour le fraisage des entrées de dentures**
Perfektionierte Fräseinheit, spezial für das Fräsen der Zahnenden
Perfectioned milling unit, especially for the milling of teeth

(30) Priorité: 09.01.1990 FR 9000153
(43) Date de publication de la demande: 17.07.1991
(73) Titulaire: SAFETY, F-92107 Boulogne-Billancourt Cédex (FR)
(72) Inventeur: Casson, Pierre, F-77920 Samois (FR); d'Andecy, Alain, F-37390 Charentilly (FR)
(74) Mandataire: Coutel, Jean-Claude

(56) Documents cités:
- DE-A- 2 804 250
- GB-A- 1 159 198
- US-A- 2 846 904

## Description

La présente invention est relative à un ensemble de fraisage, et elle s'applique en particulier, mais de manière non-exclusive, à un tel ensemble qui est utilisé pour le fraisage des entrées de dentures.

Dans certaines techniques industrielles, et en particulier dans la technique automobile, il est courant que des éléments dentés coulissent axialement l'un par rapport à l'autre pour être mis sélectivement en position d'engrènement, ou en position de non-engrènement, selon que l'un des éléments dentés doit ou non entraîner l'autre. Pour la position mutuelle inactive, les deux éléments dentés sont totalement hors de contact et, lorsqu'ils doivent être mis en coopération, ils sont déplacés axialement l'un vers l'autre. Lorsque les deux éléments sont mis en coopération, il est nécessaire que les dents de chacun d'eux pénètrent exactement et sans heurts dans les creux de dents de l'autre. Pour cela, il est déjà connu de réaliser sur les extrémités axiales des dents des deux éléments des facettes en biseau facilitant la venue en coopération des deux éléments.

Jusqu'à présent, pour réaliser ces facettes ou entrées de dentures, on a eu recours à un outil de fraisage traditionnel, travaillant essentiellement en bout, la position axiale et radiale de l'outil étant réglée, chaque fois, sur la machine de fraisage elle-même. Après un certain nombre d'opérations, l'outil de coupe, qu'il soit constitué par une fraise en acier rapide ou par une plaquette, doit être démonté de la machine de fraisage pour son remplacement par un autre outil, lequel doit alors être réglé en position axiale et en position radiale, ce qui nécessite des temps d'arrêt importants pour la machine, et par conséquent implique une faible productivité.

Par le document GB-A-1 159 198, on connaît une fraise comportant un porte-outil, des outils axiaux angulairement répartis autour de l'axe du porte-outil, et des plaquettes portées respectivement aux extrémités avant des outils. Chaque plaquette est bloquée sur son outil, de manière non-réglable, et l'outil est réglable, d'une part, en position axiale par une vis transversale accessible depuis l'extérieur et agissant entre le corps du porte-outil et la face arrière biseautée de l'outil, et, d'autre part, en position radiale par une vis accessible par l'avant de l'ensemble et agissant entre le corps du porte-outil et un manchon portant l'outil. Le blocage de l'outil dans ses deux positions de réglage se fait par une vis unique. Chaque outil, portant à l'avant une plaquette, s'étend, parallèlement à l'axe du porte-outil, à l'intérieur d'un manchon incliné sur l'axe du porte-outil. Pour le réglage axial, la face arrière de l'outil est biseautée et coopère avec la pointe conique d'une vis transversale traversant librement le manchon et agissant entre le corps du porte-outil et l'outil ; ce réglage axial se fait par coulissement de l'outil dans un alésage axial du manchon. Pour le réglage radial, le manchon, portant l'outil, coulisse, sous l'action d'une vis accessible depuis l'avant du porte - outil, dans un alésage du corps du porte-outil incliné par rapport à l'axe du porte-outil. Le blocage de l'outil se fait par une vis transversale unique qui agit directement sur l'outil, lequel réagit sur le manchon qui, à son tour, bloque la tête de la vis de réglage radial contre le corps du porte-outil.

Dans ce document, le réglage radial ne se fait pas entre la plaquette et l'outil, mais entre l'outil et le porte-outil et, par ailleurs, l'accès à la vis de réglage radial est sensiblement axial, ce qui est incommode car on ne dispose pas toujours de la place nécessaire, à l'avant de l'ensemble, surtout lorsqu'il est monté sur une machine, pour utiliser un accessoire manuel de réglage. Au surplus, le système décrit dans ce document présente un inconvénient majeur du fait qu'il n'existe qu'une seule vis de blocage, de sorte que, a) lors du réglage radial, l'outil peut librement coulisser dans le manchon, ce qui modifie sa position axiale, b) lors du réglage axial après le réglage radial, la position radiale de l'outil peut se modifier du fait que le manchon et la vis de réglage radial ne sont pas bloqués, c) si le réglage radial doit être repris, il faut débloquer l'outil, le manchon et la vis de réglage radial et recommencer toutes les opérations de réglage, et d) si seulement le réglage axial doit être repris, il faut encore débloquer l'outil, mais aussi le manchon et la vis de réglage radial, avec le risque ci-dessus d'une modification du réglage radial.

Par le document US-A-2.846.904, on connaît une barrette de perçage comportant un porte-outil et des barreaux de coupe dont la position radiale est réglée par des vis accessibles transversalement depuis l'extérieur. Toutefois, dans ce document, il n'existe pas de moyens pour régler la position axiale de l'outil sur le porte-outil.

L'invention a pour but de remédier à ces inconvénients en fournissant un ensemble de fraisage qui permet le remplacement d'un outil par un autre, ainsi que le réglage précis de cet autre outil, sans imposer une immobilisation importante de la machine,

A cet effet, l'ensemble de fraisage selon l'invention, qui comporte un porte-outil à monter sur la machine de fraisage, un outil porté fixement par le porte-outil, une plaquette de coupe portée fixement par l'outil, des premiers moyens de réglage pour régler la position axiale de l'outil sur le porte-outil, des seconds moyens de réglage pour régler la position radiale de la plaquette et des moyens de blocage de la plaquette, est caractérisé en ce que : l'outil comporte une queue axiale qui s'étend de manière coulissante axialement dans un alésage axial du porte-outil ; les premiers moyens de réglage sont agencés pour agir entre le porte-outil et l'outil de manière à définir la position axiale de l'outil ; les moyens de blocage comportent des premiers moyens agencés pour bloquer l'outil, par sa queue, par rapport au porte-outil en agissant entre le porte-outil et la queue ; la plaquette est reçue de manière coulissante dans un logement de l'extrémité avant de l'outil, incliné sur l'axe du porte-outil et de l'outil ; les seconds moyens de réglage sont agencés pour agir entre l'extrémité avant de l'outil et la plaquette ; les moyens de blocage comportent des seconds moyens, indépendants des premiers moyens de blocage et agencés pour bloquer la plaquette par rapport à l'outil ; et les premiers moyens de réglage, les seconds moyens de réglage, les premiers moyens de blocage et les seconds moyens de blocage sont situés en position sensiblement transversale pour être accessibles transversalement depuis l'extérieur lorsque l'ensemble de fraisage est monté en place sur un banc de réglage.

Ainsi, dans l'ensemble de fraisage ci-dessus selon l'invention, la partie active de l'outil, c'est-à-dire la plaquette, peut être réglée en position, grâce au double accès transversal, avec une très haute précision sur le banc de réglage, alors que la machine de fraisage travaille avec un autre ensemble de fraisage, ce qui permet une mise en place simple et rapide du nouvel ensemble sur la machine de fraisage, le réglage de la plaquette ayant été fait au préalable, ce qui permet de n'arrêter la machine que pendant une très faible durée. Au surplus, les deux blocages sont indépendants, ce qui permet d'effectuer un second réglage axial sans avoir à libérer les moyens de blocage radial.

Suivant un mode de réalisation, l'extrémité intérieure ou arrière de la queue de l'outil coopère avec les premiers moyens de réglage. Ces premiers moyens de réglage comportent un élément actif qui peut être constitué par un coin ou par une vis à tête profilée.

Quant à la plaquette, elle est reçue et bloquée dans un logement de l'extrémité libre de l'outil, et son extrémité opposée à l'extrémité de coupe coopère avec les seconds moyens de réglage. Ces seconds moyens de réglage sont par exemple constitués par une vis d'axe parallèle à la direction longitudinale de la plaquette, qui est vissée dans le corps de l'outil, dont la tête de commande est accessible transversalement depuis l'extérieur et dont l'extrémité intérieure active appuie sur un épaulement de la plaquette. La plaquette, qui peut être indexable, est par exemple en position oblique par rapport à l'axe longitudinal de l'ensemble, notamment à environ 45°.

On comprendra bien l'invention à la lecture du complément de description qui va suivre et en référence aux dessins annexés qui font partie de la description et dans lesquels :
Fig. 1 est une vue en perspective partielle et arrachée d'une roue cylindrique à denture intérieure droite avant la réalisation des entrées de dentures ;
Fig. 2 est une vue analogue à la fig. 1 après la réalisation des entrées de dentures ;
Fig. 3 est une vue en élévation, partiellement arrachée et en coupe, d'un ensemble de fraisage selon un mode de réalisation préféré, cet ensemble étant à l'état assemblé et prêt à être utilisé sur une machine de fraisage ;
Fig. 4 montre, en vue de dessus, une partie de l'ensemble de la Fig. 3 ; et
Fig. 5 est une vue en élévation, à plus grande échelle et en partie arrachée, de l'outil et de la plaquette de l'ensemble des Figs. 3 et 4.

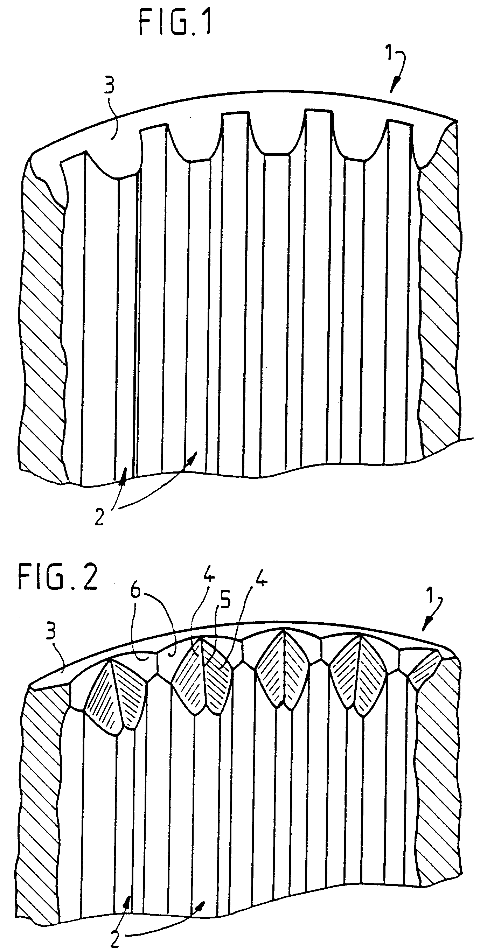

On a représenté sur la Fig. 1 une roue dentée 1 comportant des dents droites 2, par exemple intérieures. La roue 1 présente, à son extrémité adjacente à un autre élément denté avec lequel elle peut être mise en coopération ou hors de coopération par déplacement axial, une face d'extrémité 3 qui définit la limite des dents 2 et qui est par exemple plane ou légèrement conique.

Pour faciliter la venue en coopération de la roue 1 avec cet autre élément denté, on réalise sur les extrémités des dents 2 situées du côté de la face extrême radiale 3 des biseaux ou facettes 4, également dénommés entrées de dentures. Ces facettes sont réalisées par fraisage. Ces facettes sont planes et, pour une même dent, elles se coupent suivant un segment de ligne droite 5 qui est situé dans un plan axial et qui est orienté en oblique en se rapprochant de l'axe depuis la face extrême 3. La réalisation des facettes 4 provoque, de la part de l'outil de fraisage, la création de facettes de fond 6 qui n'ont pas un rôle actif. Comme on le voit sur la Fig. 2, les entrées de dentures sont donc constituées, pour chaque dent, par deux facettes inclinées qui forment rampes et dont l'intersection 5 est inclinée vers l'axe et vers l'intérieur de la roue, cet agencement facilitant la venue en coopération ces deux éléments dentés dont les extrémités des dents adjacentes sont conformées de la même manière.

On décrira maintenant un dispositif selon un mode de réalisation préféré de l'invention pour la réalisation des entrées de dentures de la Fig. 2 en partant de l'ébauche de la Fig. 1.

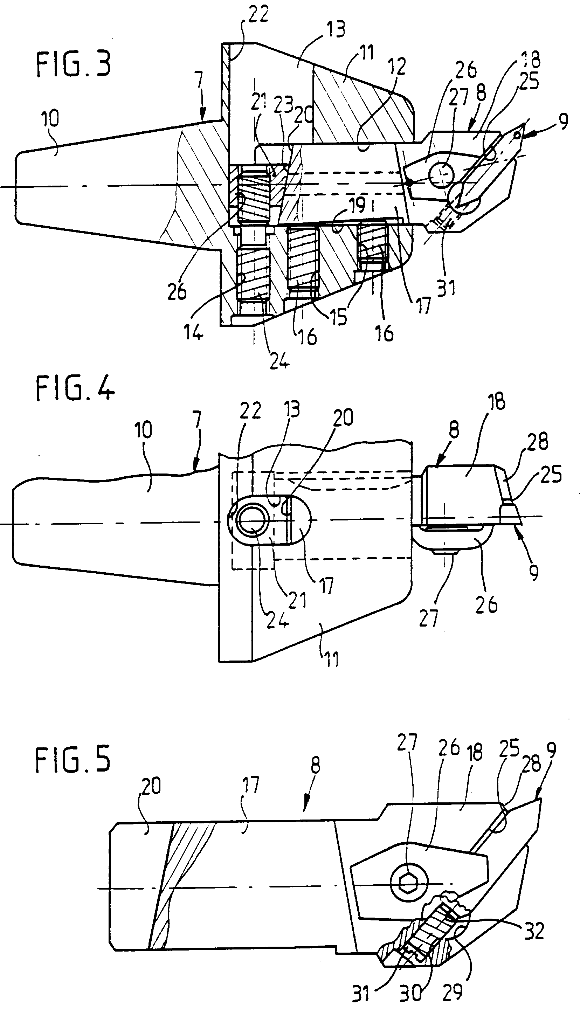

Comme montré sur les Figs. 3 et 4, l'ensemble selon un mode de réalisation préféré de l'invention comporte un porte-outil 7, un outil 8 et une plaquette de coupe 9. Le porte-outil 7 est constitué en deux parties essentielles, à savoir une queue de montage 10 et un corps 11 de réception de l'outil 8. De manière habituelle, la queue 10 est conique pour son montage tant sur un banc de réglage que sur une machine de fraisage. Le corps 11 présente un premier alésage longitudinal coaxial 12 pour la réception de l'outil 8 et un alésage transversal 13 dont le rôle sera décrit ultérieurement. Du côté opposé à l'alésage 13, le corps 11 présente un premier alésage taraudé 14 pour la réception de moyens de réglage de la position axiale de l'outil 8, et deux seconds alésages taraudés 15 pour la réception de vis 16 de blocage de l'outil 8.

L'outil 8, de manière similaire, présente une queue arrière 17 de montage et une partie avant ou corps 18 pour le montage de la plaquette 9. La queue 17 de l'outil 8 est dans l'ensemble cylindrique, et elle présente une surface plane 19 de blocage destinée à coopérer avec l'extrémité intérieure des vis 16. A l'arrière, la queue 17 présente une échancrure 20 à surface de fond inclinée, dans laquelle évolue un coin 21 dont une surface radiale extrême s'appuie sur la surface radiale 22 de l'alésage 13 et dont la face avant inclinée 23 s'appuie sur la surface de fond de l'échancrure 20. La position radiale du coin 21 est commandée par une vis 24 qui coopère par vissage à la fois avec l'alésage 14 et avec un alésage taraudé 26 du coin 21. De façon connue, la vis 24 présente deux filetages de pas et/ou de sens différents, de sorte que la rotation de la vis provoque un déplacement radial du coin 21. On assure ainsi, par la vis 24 et le coin 21, le réglage de la position axiale de l'outil 8, et par conséquent de la plaquette 9. Lorsque la position de réglage axial est obtenue, l'outil 8 est bloqué en position par les vis 16.

Comme montré en particulier sur la Fig. 5, le corps 18 de l'outil 8 comporte, à l'avant, un logement 25 pour la réception de la plaquette 9 qui, dans l'exemple, est constituée par un barreau allongé présentant deux extrémités de coupe, la plaquette 9 étant ainsi indexable à 180° pour pouvoir être utilisée deux fois. De façon connue, la plaquette 9 est immobilisée par une bride 26 et une vis 27 en s'appuyant sur deux faces du logement 25. Dans l'exemple représenté, le logement 25 est incliné, par exemple d'environ 45°, sur l'axe longitudinal commun de l'outil 8 et du porte-outil 7.

Du côté avant de l'ensemble, le logement 25 débouche librement sur la face avant 28 de l'outil 8, par rapport à laquelle l'extrémité de coupe de la plaquette 9 fait saillie, et, du côté arrière, le logement 25 débouche dans une cavité 29 à laquelle fait suite un alésage taraudé 30 qui reçoit une vis 31, accessible transversalement depuis l'extérieur, pour le réglage de la position longitudinale de la plaquette 9 dans le logement 25, et par conséquent pour le réglage de la position de cette plaquette en direction radiale. Ce réglage se fait par l'appui de l'extrémité intérieure de la vis 31 contre un épaulement 32 de l'extrémité arrière de la plaquette 9, cet épaulement 32 étant prévu sous l'angle de coupe. Lorsque la position longitudinale de la plaquette 9 dans le logement 25 est déterminée, la plaquette est immobilisée par serrage de la vis 27 qui agit sur la bride 26 pour immobiliser la plaquette dans son logement. Bien entendu, l'axe longitudinal de la vis 31 est parallèle à la direction longitudinale de la plaquette 9 et du logement 25.

Avec un ensemble selon un mode de réalisation préféré de l'invention tel que décrit ci-dessus, il est possible de réaliser le réglage précis de la position axiale et de la position radiale de la plaquette de coupe 9 montée sur l'outil 8 qui est lui-même monté sur le porte-outil 7, ce réglage se faisant sur un banc de réglage séparé, alors que la machine de fraisage est en cours de fonctionnement avec un autre ensemble. Lorsque l'ensemble ainsi préréglé sur le banc est mis en place sur la machine de fraisage, celle-ci peut immédiatement fonctionner du fait que les deux réglages ci-dessus ont déjà été faits lorsque l'ensemble était sur le banc de réglage, c'est-à-dire dans les mêmes conditions de montage que sur la machine elle-même. Lorsqu'un ensemble selon l'invention est placé sur la machine de fraisage, aucun réglage n'est donc nécessaire, ce qui constitue un gain important de productivité.

Bien entendu, les moyens de réglage pourraient être différents ; par exemple, les premiers moyens de réglage, au lieu du coin 21, pourraient comporter une vis à tête profilée agissant sur l'arrière de la queue 17.

## Revendications

1. Ensemble de fraisage, comportant un porte-outil (7) à monter sur une machine de fraisage, un outil (8) porté fixement par le porte-outil (7), une plaquette de coupe (9). portée fixement par l'outil (8), des premiers moyens de réglage (21,24) pour régler la position axiale de l'outil (8) sur le porte-outil (7), des seconds moyens de réglage (31) pour régler la position radiale de la plaquette (9), et des moyens (16,26,27) de blocage de la plaquette, caractérisé en ce que : l'outil (8) comporte une queue axiale (17) qui s'étend de manière coulissante axialement dans un alésage axial (12) du porte-outil (7) ; les premiers moyens de réglage (21, 24) sont agencés pour agir entre le porte-outil (7) et l'outil (8) de manière à définir la position axiale de l'outil ; les moyens de blocage comportent des premiers moyens (16) agencés pour bloquer l'outil, par sa queue (17), par rapport au porte-outil en agissant entre le porte-outil et la queue ; la plaquette (9) est reçue de manière coulissante dans un logement (25) de l'extrémité avant de l'outil, incliné sur l'axe du porte-outil et de l'outil ; les seconds moyens de réglage (31) sont agencés pour agir entre l'extrémité avant de l'outil et la plaquette (9) ; les moyens de blocage comportent des seconds moyens (26,27), indépendants des premiers moyens de blocage (16) et agencés pour bloquer la plaquette par rapport à l'outil ; et les premiers moyens de réglage (21,24), les seconds moyens de réglage (31), les premiers moyens de blocage (16) et les seconds moyens de blocage (26,27) sont situés en position sensiblement transversale pour être accessibles transversalement depuis l'extérieur lorsque l'ensemble de fraisage est monté en place sur un banc de réglage.

2. Ensemble selon la revendication 1 , caractérisé en ce que la queue axiale (17) de l'outil coopère, par son extrémité arrière ou intérieure (20), avec les premiers moyens de réglage (21,24).

3. Ensemble selon l'une des revendications 1 et 2, caractérisé en ce que les premiers moyens de réglage comportent un élément actif (21) appartenant au groupe constitué par un coin et une vis à tête profilée.

4. Ensemble selon l'une des revendications 1 à 3, caractérisé en ce que la plaquette (9), par son extrémité arrière opposée à l'extrémité de coupe, coopère avec les seconds moyens de réglage (31).

5. Ensemble selon la revendication 4, caractérisé en ce que la plaquette (9), par exemple indexable, est en position oblique par rapport à l'axe longitudinal de l'ensemble par exemple à environ 45°.

6. Ensemble selon l'une des revendications 1 à 5, caractérisé en ce que les seconds moyens de réglage sont constitués par une vis (31) d'axe parallèle à la direction longitudinale de la plaquette (9), qui est vissée dans le corps(18) de l'outil (8), dont la partie de commande est accessible transversalement depuis l'extérieur et dont l'extrémité intérieure active appuie sur un épaulement (32) de la plaquette (9).

7. Ensemble selon l'une des revendications 1 à 6, caractérisé en ce que les premiers moyens de blocage sont constitués par au moins une vis (16) traversant un alésage taraudé (15) du corps du porte-outil et s'appuyant sur la queue (17) de l'outil.

8. Ensemble selon l'une des revendications 1 à 7, caractérisé en ce que les seconds moyens de blocage (26,27) sont constitués par des moyens de serrage de la plaquette dans son logement (25).

9. Ensemble selon la revendication 8, caractérisé en ce que les seconds moyens de blocage comportent une bride (26) d'appui sur la plaquette et une vis (27) de serrage de la bride sur l'extrémité avant de l'outil.

## Claims

1. Milling unit, including a tool holder (7) to be mounted on a milling machine, a tool (8) held fixedly by the tool holder (7), a cutting tip (9) held fixedly by the tool (8), first adjustment means (21, 24) for adjusting the axial position of the tool (8) on the tool holder (7), second adjustment means (31) for adjusting the radial position of the tip (9), and means (16, 26, 27) for locking the tip, characterised in that: the tool (8) has an axial shank (17) which extends so as to slide axially in an axial bore (12) in the tool holder (7); the first adjustment means (21, 24) are arranged so as to act between the tool holder (7) and the tool (8) in order to define the axial position of the tool; the locking means include first means (16) arranged so as to lock the tool, by its shank (17), with respect to the tool holder by acting between the tool holder and the shank; the tip (9) is received slidingly in a housing (25) in the front end of the tool, inclined with respect to the axis of the tool holder and of the tool; the second adjustment means (31) are arranged so as to act between the front end of the tool and the tip (9); the locking means include second means (26, 27) independent of the first locking means (16) and arranged so as to lock the tip with respect to the tool; and the first adjustment means (21, 24), the second adjustment means (31), the first locking means (16) and the second locking means (26, 27) are situated in a substantially transverse position in order to be accessible transversely from the outside when the milling unit is mounted in position on a setting bench.

2. Unit according to Claim 1, characterised in that the axial shank (17) of the tool cooperates, through its rear or inner end (20), with the first adjustment means (21, 24).

3. Unit according to one of Claims 1 and 2, characterised in that the first adjustment means include an active component (21) belonging to the group consisting of a wedge and a profiled-head screw.

4. Unit according to one of Claims 1 to 3, characterised in that the tip (9), through its rear end opposite to the cutting end, cooperates with the second adjustment means (31).

5. Unit according to Claim 4, characterised in that the tip (9), which may for example be indexable, is in a slanting position with respect to the longitudinal axis of the unit, for example at approximately 45°.

6. Unit according to one of Claims 1 to 5, characterised in that the second adjustment means consist of a screw (31) with its axis parallel to the longitudinal direction of the tip (9) and which is screwed into the body (18) of the tool (8), the control part of which is accessible transversely from the outside and the active inner end of which bears on a shoulder (32) on the tip (9).

7. Unit according to one of Claims 1 to 6, characterised in that the first locking means consist of at least one screw (16) passing through a threaded bore (15) in the body of the tool holder and bearing on the shank (17) of the tool.

8. Unit according to one of Claims 1 to 7, characterised in that the second locking means (26, 27) consist of means for clamping the tip in its housing (25).

9. Unit according to Claim 8, characterised in that the second locking means include a clamp (26) bearing on the tip and a screw (27) for tightening the clamp on the front end of the tool.

## Patentansprüche

1. Fräseinheit, enthaltend einen Werkzeughalber (7) zur Montage an einer Fräsmaschine, ein von dem Werkzeughalter (7) fest gehaltenes Werkzeug (8), ein von dem Werkzeug (8) fest gehaltenes Schneidplättchen (9), erste Einstelleinrichtungen (21,24) zum Einstellen der axialen Lage des Werkzeugs (8) an dem Werkzeughalter (7), zweite Einstelleinrichtungen (31) zum Einstellen der radialen Lage des Plättchens (9) und Einrichtungen (16,26,27) zum Einspannen des Plättchens, **dadurch gekennzeichnet**, daß das Werkzeug (8) ein axiales Endstück (17) aufweist, das sich axial verstellbar in einer axialen Ausnehmung (12) des Werkzeughalters (7) erstreckt; die ersten Einstelleinrichtungen (21,24) so eingerichtet sind, daß sie zwischen dem Werkzeughalter (7) und dem Werkzeug (8) zur Bestimmung der axialen Lage des Werkzeugs wirken; die Einspanneinrichtungen erste Einrichtungen (16) enthalten, die zum Einspannen des Werkzeugs an seinem Endstück (17) am Werkzeughalter eingerichtet sind, indem sie zwischen dem Werkzeughalter und dem Endstück wirken; das Plättchen (9) verschiebbar in einer Aufnahme (25) am vorderen Ende des Werkzeugs angeordnet ist, die gegenüber der Achse des Werkzeughalters und des Werkzeugs geneigt ist; die zweiten Einstelleinrichtungen (31) derart eingerichtet sind, daß sie zwischen dem vorderen Ende des Werkzeugs und dem Plättchen (9) wirken; die Einspanneinrichtungen zweite Einrichtungen (26,27) enthalten, die von den ersten Einspanneinrichtungen (16) unabhängig sind und dazu eingerichtet sind, das Plättchen an dem Werkzeug festzuklemmen; und die ersten Einstelleinrichtungen (21,24), die zweiten Einstelleinrichtungen (31), die ersten Einspanneinrichtungen (16) und die zweiten Einspanneinrichtungen (26,27) im wesentlichen quer angeordnet sind, um von außen quer zugänglich zu sein, wenn die Fräseinheit an einer Einstellbank befestigt ist.

2. Einheit nach Anspruch 1, dadurch gekennzeichnet, daß das axiale Endstück (17) des Werkzeugs an seinem hinteren oder inneren Ende (20) mit den ersten Einstelleinrichtungen (21,24) zusammenwirkt.

3. Einheit nach einem der Ansprüche 1 und 2, dadurch gekennzeichnet, daß die ersten Einstelleinrichtungen ein aktives Element (21) enthalten, das zu der Gruppe gehört, die von einem Keil und einer Schraube mit Profilkopf gebildet ist.

4. Einheit nach einem der Ansprüche 1 bi2 3, dadurch gekennzeichnet, daß das Plättchen (9) an seinem hinteren Ende gegenüber dem Ende der Schneide mit dem zweiten Einstelleinrichtungen (31) zusammenwirkt.

5. Einheit nach Anspruch 4, dadurch gekennzeichnet, daß das beispielsweise ausrichtbare Plättchen schräg gegenüber der Längsachse der Einheit beispielsweise unter einem Winkel von etwa 45° angeordnet ist.

6. Einheit nach einem der Ansprüche 1 bis 5, dadurch gekennzeichnet, daß die zweiten Einstelleinrichtungen von einer Schraube (31) mit zur Längsrichtung des Plättchens (9) paralleler Achse gebildet sind, die in den Körper (18) des Werkzeugs (8) geschraubt ist und deren Steuerabschnitt quer von außen zugänglich ist und deren inneres, aktives Ende an einer Schulter (32) des Plättchens (9) anliegt.

7. Einheit nach einem der Ansprüche 1 bis 6, dadurch gekennzeichnet, daß die ersten Einspanneinrichtungen von wenigstens einer Schraube (16) gebildet sind, die eine Gewindebohrung (19) im Werkzeugkörper durchdringt und an dem Endstück (17) des Werkzeugs anliegt.

8. Einheit nach einem der Ansprüche 1 bis 7, dadurch gekennzeichnet, daß die zweiten Einspanneinrichtungen (26,27) von Einrichtungen zum Festspannen des Plättchens in seiner Aufnahme (25) gebildet sind.

9. Einheit nach Anspruch 8, dadurch gekennzeichnet, daß die zweiten Einspanneinrichtungen einen Flansch (26) zur Anlage an dem Plättchen und eine Schraube (27) zum Festklemmen des Flansches am vorderen Ende des Werkzeugs umfassen.
